# Europäisches Patentamt

(19) **European Patent Office**

**Office européen des brevets**

(11) Numéro de publication: **0 074 310**
**B1**

(12) **FASCICULE DE BREVET EUROPEEN**

(45) Date de publication du fascicule du brevet:
19.06.85

(51) Int. Cl.⁴: **G 01 F 23/14**

(21) Numéro de dépôt: **82401589.5**

(22) Date de dépôt: **27.08.82**

(54) Dispositif de détection des variations de la hauteur du niveau libre d'un liquide dans une enceinte fermée.

(30) Priorité: **04.09.81 FR 8116848**

(43) Date de publication de la demande:
**16.03.83 Bulletin 83/11**

(45) Mention de la délivrance du brevet:
**19.06.85 Bulletin 85/25**

(84) Etats contractants désignés:
**BE CH DE GB IT LI NL**

(56) Documents cités:
**CH - A - 576 632**
**DE - A - 2 734 491**
**DE - C - 699 467**
**DE - C - 891 618**
**FR - A - 1 413 444**
**FR - A - 1 481 242**
**US - A - 2 455 200**

(73) Titulaire: **COMMISSARIAT A L'ENERGIE ATOMIQUE**
**Etablissement de Caractère Scientifique Technique et**
**Industriel, 31/33, rue de la Fédération, F-75015 Paris (FR)**

(72) Inventeur: **Fajeau, Maurice, 512, Chemin du Saint**
**Sépulcre, F-84120 Pertuis (FR)**

(74) Mandataire: **Mongrédien, André et al, c/o**
**BREVATOME 25, rue de Ponthieu, F-75008 Paris (FR)**

## Description

La présente invention a pour objet un dispositif de détection et de mesure des variations de la hauteur du niveau libre d'un liquide et plus particulièrement d'un liquide contenu dans une enceinte fermée sous pression, par exemple dans la cuve d'un réacteur nucléaire à eau sous pression.

Il existe à l'heure actuelle différentes techniques permettant de mesurer la hauteur du niveau libre d'un liquide contenu dans une enceinte sous pression. Une première méthode ulitise couramment un indicateur de niveau par monomètre différentiel dont les tubes de liaison sont horizontaux et placés à des hauteurs différentes. Le principal défaut de ce dispositif est que le tube de liaison supérieur est continuellement rempli d'un mélange du liquide et de sa vapeur dû à l'ébullition partielle dans le tube de liaison, même lorsque le niveau dans l'enceinte baisse, ce qui introduit des erreurs de mesure. Une autre méthode consiste à placer, au voisinage de la paroi de l'enceinte et extérieurement à celle-ci, un certain nombre de sources radioactives placées à des hauteurs différentes et un certain nombre de détecteurs généralement diamétralement opposés à ces sources: la comparaison des indications données par les différents détecteurs permet de déterminer la hauteur de la surface libre du liquide. Cette dernière solution nécessite un appareillage complexe et augmente donc notablement le coût des installations. Enfin, une autre solution faissant usage d'un tube court d'une tube long et d'un monomètre différentiel est décrite dans US-A-2 455 200.

La présente invention a justement pour objet un dispositif qui remédie aux inconvénients des méthodes connues en étant simple à installer et qui présente une grande sûreté de fonctionnement. Le dispositif selon l'invention est défini et décrit par la revendication 1.

Dans une première variante de réalisation de ce dispositif, le tube long et le tube court sont éloignés l'un de l'autre, les deux pots de condensation étant de dimensions voisines et situés sensiblement dans un même plan horizontal.

Selon une autre variante de réalisation, le tube long est disposé à l'intérieur du tube court et du premier pot de condensation, le deuxième pot de condensation étant placé au-dessus du premier.

D'autres aspects et avantages de l'invention ressortiront de la description qui va suivre, donnée à titre d'exemple purement illustratif et nullement limitatif, en référence aux dessins annexés dans lesquels:

— la figure 1 est une vue schématique représentant une première variante de réalisation du dispositif dans laquelle le tube court et le tube long sont éloignés l'un de l'autre, et

— la figure 2 est une vue schématique d'un deuxième mode de réalisation dans lequel le tube long est placé à l'intérieur du tube court et concentriquement à celui-ci.

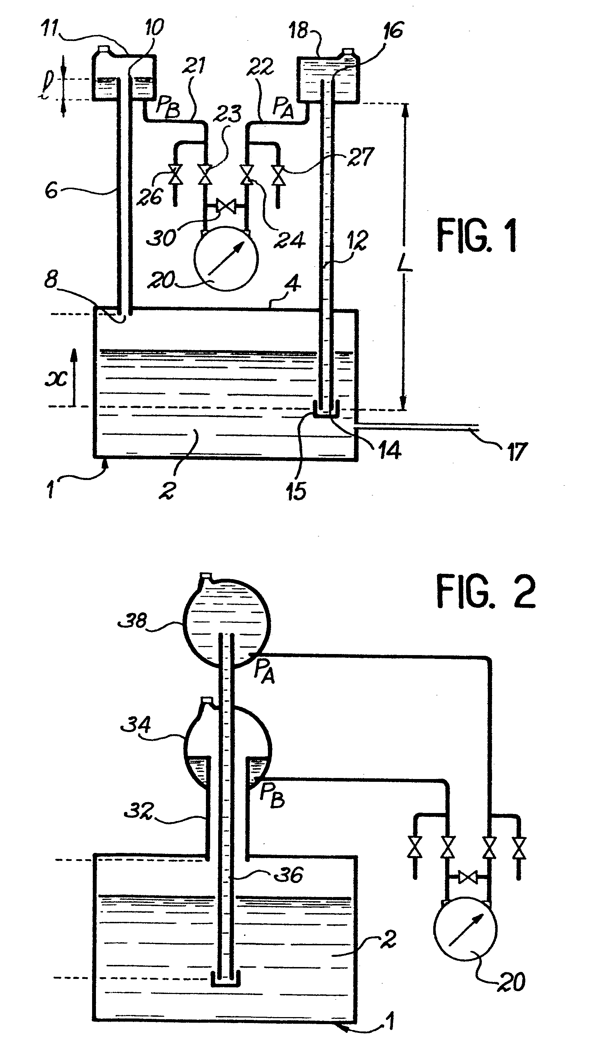

La figure 1 montre une enceinte 1 partiellement remplie d'un liquide 2 et fermée à sa partie supérieure par une paroi supérieure ou un couvercle 4. Un premier tube ou tube court 6 de gros diamètre est disposé verticalement au-dessus de l'enceinte 1 et l'extrémité inférieure 8 du tube 6 débouche à l'intérieur de la cuve dans la partie supérieure de celle-ci, au voisinage du couvercle 4. L'extrémité supérieure 10 du tube court 6 débouche à l'intérieur d'un premier récipient ou premier pot de condensation 11, à une hauteur l au-dessus du fond de celui-ci. Un deuxième tube ou tube long 12, vertical dans l'exemple décrit ici, plonge à l'intérieur de la cuve 1 et son extrémité inférieure 14 débouche dans celle-ci à un niveau nettement inférieur à celui où débouche l'extrémité 8 du tube court 6. L'extrémité inférieure 14 du tube 12 est munie d'une garde hydraulique 15 qui, dans l'exemple décrit ici, est constituée par un godet. Ce dispositif permet au tube 12 et au deuxième récipient 18 de rester constamment remplis de liquide même si le niveau libre de celui-ci dans la cuve 1 descend au-dessous du godet 15: la pression du gaz règnant dans l'enceinte appuie sur la surface libre du liquide contenu dans le godet et empêche de ce fait la vidange du tube 12. L'extrémité supérieure 16 du tube 12 débouche dans un deuxième récipient ou deuxième pot de condensation 18, sensiblement de même dimension que le premier pot de condensation 11, et situé dans le même plan horizontal qui celui-ci. Un monomètre différentiel 20 permet de connaître à tout instant la différence entre la pression $P_B$ qui règne dans le premier pot de condensation 11 et la pression $P_A$ qui règne dans le deuxième pot de condensation 18. Deux canalisations 21 et 22, munies de vannes d'isolement 23 et 24, relient le monomètre 20 aux pots de condensation 11 et 18 respectivement. La figure montre encore deux vannes 26 et 27 servant à purger les conduites 21 et 22 ainsi qu'une vanne 30 permettant de bypasser le monomètre 20. Les canalisations 21 et 22 débouchent dans le fond des récipients 11 et 18 où se situent les points de prise de pression. Dans cette variante, il est intéressant que les fonds des pots de condensation soient dans un même plan horizontal car, lorsque la cuve 1 et le tube court 6 sont remplis de liquide, on a: $P_B - P_A = 0$.

Le fonctionnement de l'appareil est le suivant: si l'on prend comme plan de référence le plan horizontal correspondant à l'extrémité inférieure 14 du tube long 12 et si l'on désigne par x la hauteur du niveau libre du liquide 2 au-dessus de ce plan de référence, la différence de pression $P_B - P_A$ est donnée par la formule:

$$P_B - P_A = -\rho g x + \rho g (L + l)$$

avec: $\rho$ = masse volumique du liquide; g = accélération de la pesanteur; L = hauteur du tube long, comptée entre sa partie inférieure 14 et le fond du deuxième pot de condensation 18;

I = dénivellation entre la partie supérieure du tube court 6 et le fond du premier pot de condensation 11.

Ainsi, lorsque le niveau de la surface libre du liquide 2 est situé entre le plan de référence et la partie supérieure de la cuve, ou à l'intérieur du tube court 6, la différence de pression $P_B - P_A$ varie linéairement en fonction inverse de la hauteur x de liquide. Lorsque la surface libre du liquide dans le tube 6 atteint l'extrémité supérieure 10 de ce tube, la différence de pression $P_B - P_A$ s'annule car x = L + l et les points où l'on prend ces pressions sont situés dans un même plan horizontal à l'intérieur d'une seule et même masse liquide.

Lorsque la surface libre du liquide 2 descend en-dessous de l'extrémité inférieure 14 du tube long 12, et quelle que soit la hauteur du liquide, la différence de pression $P_B - P_A$ est constante et non nulle car la garde hydraulique 15 empêche le tube long 12 et le deuxième pot de condensation 18 de se vider.

Au départ, lorsque la cuve 1 et le tube 6 sont entièrement remplis de liquide jusqu'à un niveau égal ou supérieur à celui de l'extrémité supérieure 10 du tube 6, la différence de pression $P_B - P_A$ est nulle. En cas de fuite accidentelle dans la cuve 1, il y a apparition d'un niveau libre à la partie supérieure de celle-ci et le tube 6 se vide aussitôt: le fait qu'il soit vertical facilite la descente du liquide et empêche qu'il soit bouché par une éventuelle condensation de la vapeur du liquide 2. Le monomètre détecte alors une brusque augmentation de la pression différentielle $P_B - P_A$ et peut éventuellement déclencher une alimentation de secours 17 par l'intermédiaire d'un système d'asservissement. Inversement, lors du remplissage de la cuve, le manomètre peut agir pour arrêter l'alimentation dès que la différence $P_B - P_A$ s'annule à nouveau. La garde hydraulique 15 équipant l'extrémité inférieure 14 du tube long 12 maintient ce dernier constamment rempli de liquide lorsque le niveau de celui-ci dans l'enceinte descend au-dessous du plan de référence: ceci permet d'avoir une indication de pression différentielle constante (la différence $P_B - P_A$ n'étant pas nulle) tant que le niveau libre du liquide dans l'enceinte est en-dessous de l'extrémité inférieure du tube long. Si celui-ci se vidait, on aurait une différence de pression nulle, et on ne saurait plus si l'enceinte est remplie ou partiellement vide.

La figure 2 illustre une variante dans laquelle le tube court et le tube long ne sont pas séparés comme dans la figure 1, mais au contraire disposés concentriquement l'un par rapport à l'autre. Sur cette figure, on voit à la partie supérieure de la cuve 1 le tube court 32 dont le diamètre est supérieur au diamètre du tube 6 de la figure 1. Le tube court 32 débouche dans un premier pot de condensation 34. On voit également le tube long 36, débouchant toujours dans la cuve à un niveau inférieur à celui où débouche le tube 32, mais placé à l'intérieur de celui-ci et concentriquement. Le tube long 36 traverse donc le tube 32 ainsi que le premier pot de condensation 34 et son extrémité supérieure débouche à l'intérieur d'un deuxième pot de condensation 38 situé au-dessus du premier.

Le principe de fonctionnement de cette variante est le même que celui de la variante décrite en référence à la figure 1, mais il y a lieu de remarquer que, lorsque la cuve et le tube 32 sont remplis de liquide, la différence de pression $P_B - P_A$ est constante mais elle n'est pas nulle, car les points de prise de pression ne sont pas situés dans un même plan horizontal d'une même masse liquide. Cependant, il est toujours possible de déclencher une alarme en asservissant le manomètre pour la valeur critique de la pression différentielle correspondant au remplissage du tube 32. Dans cette variante, lorsque le niveau de la surface libre du liquide 2 dans la cuve 1 descend en-dessous du plan de référence, la différence $P_B - P_A$ est encore constante, mais différente de la pression différentielle correspondant au remplissage du tube 32. Il est donc encore possible d'asservir l'alimentation de la cuve en prenant en compte les deux valeurs critiques de la pression différentielle.

On voit donc que le dispositif selon l'invention présente plusieurs avantages particulièrement intéressants. Tout d'abord, il est d'une construction simple et peu coûteuse et le fait que le tube court 6 soit vertical évite les erreurs de mesures dues à un éventuel bouchage de celui-ci par de la vapeur condensée. D'autre part, le fait que le tube long soit muni d'une garde hydraulique lui permettant de rester constamment rempli de liquide fait que la différence de pression $P_B - P_A$ est constante et non nulle lorsque le niveau du liquide dans la cuve 2 descend au-dessous du plan de référence: il est donc alors facile de savoir quand la cuve est pleine et quand elle est partiellement vidée. On peut ainsi mettre en route ou arrêter une alimentation extérieure ou déclencher une alarme sur indication du manomètre.

En outre, la disposition d'un pot de condensation à la verticale du tube long permet de recondenser la vapeur qui s'y forme lors de la dépressurisation accidentelle de l'enceinte, évitant ainsi des variations de masse volumique dans le tube qui pourraient perturber la mesure de la pression.

Il est bien entendu que l'invention ne se limite pas aux seuls exemples qui viennent d'être décrits mais qu'on peut envisager des variantes sans sortir pour autant du cadre de l'invention. C'est ainsi que, si le tube court 6 est toujours vertical, il n'est pas nécessaire que le tube long le soit aussi, bien que ce soit, comme on vient de l'expliquer, la solution la plus simple et la plus intéressante. D'autre part, la garde hydraulique permettant à ce dernier d'être constamment rempli de liquide a la forme d'un godet dans les deux exemples que ont été décrits, mais on peut envisager d'autres modes de réalisation comme par exemple de donner une forme recourbée à l'extrémité inférieure du tube long.

## Revendication

1. Dispositif de détection des variations de la hauteur du niveau libre d'un liquide (2) contenu dans une enceinte fermée (1), en particulier dans une enceinte fermée sous pression, le dispositif comportant:
— un premier tube ou tube court (6), disposé verticalement, dont l'extrémité inférieure (8) débouche dans l'enceinte (1) au voisinage de la paroi supérieure (4) de cell-ci (1) et dont l'extrémité supérieure (10) débouche à l'extérieur de l'enceinte (1),
— un deuxième tube ou tube long (12) ayant une extrémité supérieure (16) et une extrémité inférieure (14), cette dernière débouchant dans l'enceinte (1) à un niveau inférieur à celui du tube court (6) ledit dispositif étant caractérisé en ce que l'extrémité supérieure (10) du tube court (6) plonge dans un premier récipient ou premier pot de condensation (11), en ce que l'extrémité inférieure (14) du tube long (12) est munie d'une garde hydraulique (15) afin que le tube long (12) rest rempli de liquide lorsque le niveau de celui-ci dans l'enceinte (1) descend au-dessous de son extrémité inférieure (14), l'extrémité supérieure (16) dudit tube long (12) débouchant dans un deuxième récipient ou deuxième pot de condensation (18), le tube long (12) et le deuxième pot de condensation (18) étant constamment remplis de liquide, et en ce que
— un manomètre différentiel (20) permet de mesurer la différence de pression entre les premier (11) et deuxième (18) pots de condensation.

2. Dispositif selon la revendication 1, caractérisé en ce que le tube court (6) et le tube long (12) sont éloignés l'un de l'autre, le premier (11) et le deuxième (18) pots de condensation étant de dimensions voisines et situés sensiblement dans un même plan horizontal.

3. Dispositif selon la revendication 1, caractérisé en ce que le tube long (36) est disposé à l'intérieur du tube court (32) et du premier pot de condensation (34), le deuxiéme pot de condensation (38) étant placé au-dessus du premier (34).

## Patentansprüche

1. Vorrichtung zum Feststellen von Höhenänderungen des freien Niveaus einer Flüssigkeit (2) in einem geschlossenem Raum (1), insbesondere in einem geschlossenen, sich unter Druck befindenden Raum, mit einem ersten Rohr oder kurzen Rohr (6), welches vertikal angeordnet ist und dessen unteres Ende (8) in den Raum (1) in der Nähe seiner oberen Wand (4) und dessen oberes Ende (10) außerhalb des Raumes (1) mündet, einem zweiten Rohr oder langen Rohr (12), welches ein oberes Ende (16) und ein unteres Ende (14) aufweist, wobei letzteres in den Raum (1) auf einer geringeren Höhe als diejenige des kurzen Rohres (6) mündet, dadurch gekennzeichnet, daß das obere Ende (10) des kurzen Rohres (6) in einem ersten Behälter oder ersten Kondenstopf (11) taucht, daß das untere Ende (14) des langen Rohres (12) mit einem Flüssigkeitsverschluß (15) versehen ist, damit das lange Rohr (12) mit Flüssigkeit gefüllt bleibt, wenn die Höhe der Flüssigkeit in dem Raum (1) unterhalb seines unteren Endes (14) absinkt, daß das obere Ende (16) des langen Rohres (12) in einen zweiten Behälter oder zweiten Kondenstopf (18) mündet, daß das lange Rohr (12) und der zweite Kondenstopf (18) stets mit Flüssigkeit gefüllt sind, und daß mit einem Differentialmanometer (20) der Druckunterschied zwischen dem ersten (11) und dem zweiten (18) Kondenstopf meßbar ist.

2. Vorrichtung nach Anspruch 1, dadurch gekennzeichnet, daß das kurze Rohr (6) und das lange Rohr (12) voneinander entfernt sind und daß der erste (11) und der zweite (18) Kondenstopf nahe beieinanderliegende Abmessungen aufweisen und sich im wesentlichen auf der gleichen horizontalen Ebene befinden.

3. Vorrichtung nach Anspruch 1, dadurch gekennzeichnet, daß das lange Rohr (36) innerhalb des kurzen Rohres (32) und des ersten Kondenstopfes (34) angeordnet ist, wobei der zweite Kondenstopf (38) oberhalb des ersten (34) angeordnet ist.

## Claims

1. Device for detecting variations in the height of the free level of a liquid (2) contained in a closed container (1), particularly in a pressurized closed container, the device comprising:
— a vertically-disposed first tube or short tube (6), whose lower end opens into the container (1) near the upper wall (4) of the latter (1) and whose upper end (10) opens externally of the container (1),
— a second tube or long tube (12) having an upper end (16) and a lower end (14), the latter opening into the container (1) at a level below that of the short tube (6), said device being characterized in that the upper end (10) of the short tube (6) is located inside a first receiver or first condensation vessel (11) and in that the lower end (14) of the long tube (12) is provided with an hydraulic guard (15) whereby the long tube (12) remains full of liquid when the level thereof in the container (1) falls below its lower end (14), the upper end (16) of said long tube opening into a second receiver or second condensation vessel (18), the long tube (12) and the second condensation vessel (18) being constantly refilled with liquid, and in that
— a differential monometer (20) permits measurement of the pressure difference between the first (11) and second (18) condensation vessel.

2. Device according to Claim 1, characterized in that the short tube (6) and the long tube (12) are separated from one another, the first (11) and second (18) condensation vessels having similar dimensions and being substantially in the same horizontal plane.

3. Device according to Claim 1, characterized in that the long tube (36) is located in the interior of the short tube (32) and of the first condensation vessel (34), the second condensation vessel (38) being located above the first (34).

FIG. 1

FIG. 2